(19) Europäisches Patentamt
European Patent Office
Office européen des brevets

(11) Publication number: 0 102 160 B1

(12) # EUROPEAN PATENT SPECIFICATION

(45) Date of publication of patent specification: **17.12.86**

(51) Int. Cl.$^4$: **C 08 G 63/60**

(21) Application number: **83304023.1**

(22) Date of filing: **11.07.83**

(54) **Anisotropic melt processable polyester comprising relatively low concentration of 6-oxy-2-naphthoyl moiety.**

(30) Priority: **26.07.82 US 401932**
**18.04.83 US 485820**
**06.05.83 US 492103**

(43) Date of publication of application:
**07.03.84 Bulletin 84/10**

(45) Publication of the grant of the patent:
**17.12.86 Bulletin 86/51**

(84) Designated Contracting States:
**DE FR GB IT NL**

(56) References cited:
**EP-A-0 049 617**
**EP-A-0 071 447**
**EP-A-0 076 133**
**US-A-4 219 461**

(73) Proprietor: **CELANESE CORPORATION**
**1211 Avenue of the Americas**
**New York New York 10036 (US)**

(72) Inventor: **Calundann, Gordon W.**
**1275 Rock Avenue**
**North Plainfield New Jersey (US)**
Inventor: **Charbonneau, Larry F.**
**166 Lafayette Avenue**
**Chatman New Jersey (US)**
Inventor: **Benicewicz, Brian C.**
**324 Manor Avenue**
**Cranford New Jersey (US)**

(74) Representative: **Downer, John Michael et al**
**Imperial Chemical Industries PLC**
**Legal Department: Patents**
**PO Box 6 Bessemer Road**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 102 160 B1

Courier Press, Leamington Spa, England.

**Description**

This invention relates to a melt processable polyester capable of forming an anisotropic melt.

Although many aromatic polyesters are intractable materials aromatic polyesters which are capable of forming an anisotropic melt have been extensively described in the literature and in patents.

Representative disclosures of anisotropic melt forming polyesters, poly(ester-amides), or poly(ester carbonates) which may include 6-oxy-2-naphthoyl moiety are present in US Patent Nos. 4 161 470; 4 219 461; 4 256 624; 4 279 803; 4 299 756; 4 318 841; 4 318 842; 4 330 457 and 4 337 190; and commonly assigned US Serial Nos. 251 625, filed April 6, 1981; 251 629, filed April 6, 1981; 287 345, filed July 27, 1981 and 319 024, filed November 6, 1981.

The US Patent No. 4 219 461 a polyester is disclosed which comprises substantial concentrations of 6-oxy-2-napthoyl and 4-oxybenzoyl moieties and symmetrical dioxyaryl and symmetrical dicarboxyaryl moieties.

In US Patent No. 4 299 756 a polyester is disclosed which comprises 6-oxy-2-naphthoyl moiety, 3-phenyl-4-oxybenzoyl or 2-phenyl-4-oxybenzoyl moiety, 1,3-dioxyphenylene moiety and terephthaloyl moiety..

In US Patent No. 4 318 841 a polyester is disclosed which comprises 6-oxy-2-naphthoyl moiety, 4-oxybenzoyl moiety, the non-symmetrical 1,3-dioxyphenylene moiety, and terephthaloyl moiety.

In European Patent Publication No. 76 133 a polyester is disclosed which comprises about 2.5 to 15 mole percent of 6-oxy-2-naphthoyl moiety, about 40 to 70 mole percent of 4-oxybenzoyl moiety, at least about 10 mole percent of 1,3-dioxyphenylene moiety, and at least 10 mole percent of isophthaloyl moiety. The possible inclusion of a terephthaloyl moiety and the advantageous property enhancement resulting from the presence of such moiety in combination with the other moieties are not identified. Furthermore, the polymer there reported is indicated to exhibit a substantially lower modulus than that obtained when the 1,3-dioxybenzoyl moiety is replaced by a 4,4'-dioxybiphenyl moiety.

The present invention provides novel melt processable polyesters which form a highly tractable anisotropic melt phase below approximately 400°C in the substantial absence of polymer degradation unlike many polymers which include a relatively high concentration of 4-oxybenzoyl moiety. The polyesters can be prepared on a more economical basis than that claimed in US Patent No. 4 219 461 since they include 6-oxy-2-naphthoyl moiety in a relatively low concentration.

According to the present invention there is provided a melt processable polyester capable of forming an anisotropic melt phase at a temperature below approximately 400°C comprising the recurring moieties I, II, III and IV wherein:

I is 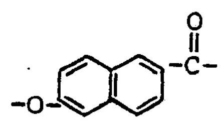

II is 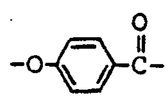

III is a symmetrical dioxyaryl moiety of the formula:

$$—O—Ar—O—$$

selected from

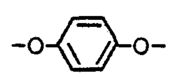 and 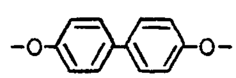

and

IV is a dicarboxyaryl moiety of the formula

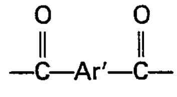

where Ar' is a divalent radical comprising at least one aromatic ring characterised in that said polyester comprises 3 to 15 mole percent of moiety I, 20 to 70 mole percent of moiety II, 7.5 to 38.5 mole percent of moiety III, and 7.5 to 38.5 mole percent of moiety IV and in that when moiety III is

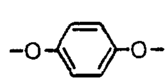

moiety IV is

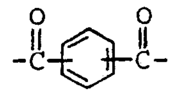

comprising a mixture of 40 to 90 mole percent in the form of the isophthaloyl moiety and 10 to 60 mole percent in the form of the terephthaloyl moiety, and wherein moieties III and IV may include substitution of at least some of the hydrogen atoms present upon an aromatic ring selected from the group consisting of an alkyl group of 1 to 4 carbon atoms, an alkoxy group of 1 to 4 carbon atoms, halogen, phenyl, substituted phenyl, and mixtures thereof.

The melt processable polyester of the present invention comprises at least four recurring moieties which when combined in the polyester have been found to form an atypical highly tractable anisotropic melt phase at a temperature below approximately 400°C, and preferably below approximately 370°C (e.g. below approximately 350°C in a particularly preferred embodiment). In those instances when the polyester is sufficiently crystalline the polymer melting temperature may be confirmed by the use of a differential scanning calorimeter (i.e. DSC) employing repeat scans at a 20°C per minute heat-up rate and observing the peak of the DSC melt transition. In those instances when the polyester is substantially amorphous it exhibits no melting peak which is readily discernible by differential scanning calorimetry. Because of its ability to exhibit anisotropic properties (i.e. liquid crystalline properties) in the melt, the polyester readily can form a product having a highly oriented molecular structure upon melt processing. Preferred polyesters are capable of undergoing melt processing at a temperature in the range of approximately 320° to 390°C. The usual difficulties incurred when one attempts to melt process many aromatic polyesters by conventional melt processing techniques effectively are eliminated.

The first essential unit (i.e. moiety I) of the polyester, of the present invention is a 6-oxy-2-naphthoyl moiety of the structural formula:

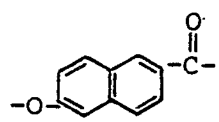

Such moiety is free of aromatic ring substitution and is present in a relatively low concentration as discussed hereafter.

As will be apparent to those skilled in the art, moiety I can be derived from unsubstituted 6-hydroxy-2-naphthoic acid and the derivatives thereof. A convenient laboratory preparation for forming 6-hydroxy-2-naphthoic acid is described in Berichte, Vol. 58, 2835—45 (1925) by K Fries and K Schimmelschmidt which is herein incorporated by reference. Also, US Patent No. 1 593 816 is concerned with a process for synthesizing 6-hydroxy-2-naphthoic acid by reacting carbon dioxide with the potassium salt of beta-naphthol.

Moiety I comprises approximately 3 to 15 mole percent of the polyester. In a preferred embodiment moiety I is present in a concentration of approximately 5 to 10 mole percent (e.g. 5 or 10 mole percent).

The presence of moiety I in the polyester of the present invention even in such low concentrations has been found to significantly lower the melting or softening temperature of the resulting polyester thereby making possible the use of more conventional melt extrusion equipment and processing conditions than would otherwise be required. For instance, if moiety I were eliminated and the concentrations of the other moieties correspondingly increased, the melting temperature of the resulting polyester commonly would be approximately 30° to 80°C higher. Such lowering of the melting temperature in the polyester of the present invention is accomplished in combination with the ability to form a highly tractable anisotropic melt. The relatively low concentration of moiety I makes it possible to obtain a polyester with these attractive properties at minimum cost.

The second essential moiety (i.e. moiety II) of the polyester of the present invention is a 4-oxybenzoyl moiety of the structural formula:

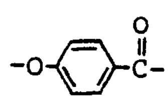

Such moiety is free of ring substitution and is present in a substantial concentration. For instance, moiety II is present in a concentration of 20 to 70 mole percent. In a preferred embodiment moiety II is present in a concentration of 50 to 65 mole percent (e.g. 50 or 60 mole percent).

The third essential moiety (i.e. moiety III) of the polyester of the present invention is a symmetrical dioxyaryl moiety of the formula:

—O—Ar—O—

which is selected from

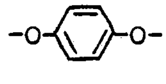 and 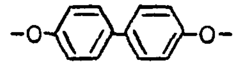

Moiety III is symmetrical in the sense that the divalent bonds which join this moiety to other moieties in the main polymer chain are symmetrically disposed on one or more aromatic rings (e.g. are para to each other or diagonally disposed when present on a naphthalene ring).

Moiety III optionally may include substitution of at least some of the hydrogen atoms present upon an aromatic ring selected from the group consisting of an alkyl group of 1 to 4 carbon atoms, an alkoxy group of 1 to 4 carbon atoms, halogen, phenyl, substituted phenyl, and mixtures of the foregoing. Representative examples of ring substituted compounds from which moiety III may be derived include methyl hydroquinone, chloro-hydroquinone, and bromohydroquinone. However in a preferred embodiment moiety III is free of ring substitution and the concomitant expense associated therewith.

Moiety III is present in the polyester of the present invention in a concentration of 7.5 to 38.5 mole percent, and preferably in a concentration of 12.5 to 22.5 mole percent (e.g. 17.5 or 20 mole percent).

The fourth essential moiety (i.e. moiety IV) of the polyester of the present invention is a dicarboxyaryl moiety of the formula:

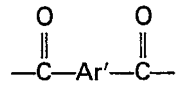

where Ar' is a divalent radical comprising at least one aromatic ring. The Ar' of moiety IV may be:

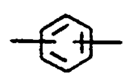

wherein the divalent bonds are meta and/or para disposed which join this moiety to other moieties in the main polymer chain.

Moiety IV optionally may include substitution of an least some of the hydrogen atoms present upon an aromatic ring selected from the group consisting of an alkyl group of 1 to 4 carbon atoms, an alkoxy group of 1 to 4 carbon atoms, halogen, phenyl, substituted phenyl, and mixtures of the foregoing. However, in a preferred embodiment moiety IV is free of ring substitution and the concomitant expense associated therewith.

Preferred moieties which may serve as the dicarboxyaryl moiety in the polyester of the present invention include:

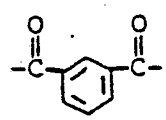 , 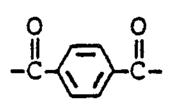 , 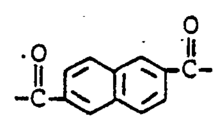 ,

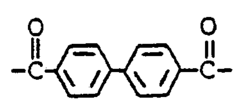 , 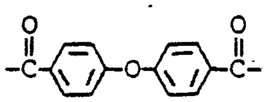 , 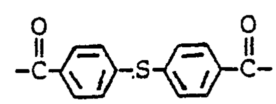 ,

and 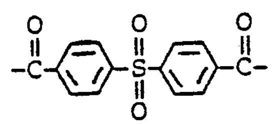 ,

and mixtures of the foregoing.

When moiety III is

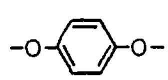

optionally substituted moiety IV is 40 to 90 mole percent (e.g. 50 mole percent) of isophthaloyl moiety and 10 to 60 mole percent of terephthaloyl moiety (e.g. 50 mole percent). In another particularly preferred embodiment moiety IV is all terephthaloyl moiety and is incorporated in conjunction with a 4,4'-dioxybiphenyl moiety of moiety III.

Moiety IV is present in the polyester of the present invention in a concentration of approximately 7.5 to 38.5 mole percent, and preferably in a concentration of approximately 12.5 to 22.5 mole percent (e.g. 17.5 or 20 mole percent). When isophthaloyl moiety is present as all or as a portion of moiety IV in the polyester of the present invention, it is preferred that the total molar concentration of moiety I plus the molar concentration of isophthaloyl moiety does not substantially exceed approximately 25 mole percent of the polyester.

Other ester-forming moieties (e.g. dioxy units, dicarboxy units and/or other combined oxy and carboxy units) than those specified for moieties I, II, III and IV additionally may be included in the polyester of the present invention in a minor concentration. Representative additional ester-forming moieties may be derived from substituted hydroxynaphthoic acids, m-hydroxybenzoic acid, substituted hydroxybenzoic

acids, cycloaliphatic dicarboxylic acids, etc. Amide-forming moieties also may be included in the polyester of the present invention in a minor concentration. Representative reactants which may form such amide-forming moieties include m-aminophenol, p-aminophenol, m-aminobenzoic acid, p-aminobenzoic acid, m-phenylenediamine, p-phenylenediamide, etc. The additional ester-forming moieties and/or amide-forming moieties optionally may be included in the polyester of the present invention so long as such moieties do not raise the melting temperature of the resulting polymer above that specified, or do not otherwise interfere with the exhibition of the desired anisotropic properties in the melt. The total minor concentration of such additional ester-forming and amide-forming moieties if present generally will be less than 10 mole percent of the total polymer. The polyester of the present invention is preferably "wholly aromatic" in the sense that each moiety present contributes at least one aromatic ring to the main polymer chain.

The polyester of the present invention commonly exhibits:

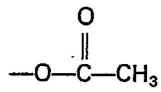 or 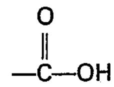

end groups depending upon the synthesis route selected. As will be apparent to those skilled in the art, the end groups optionally may be capped, e.g. acidic end groups may be capped with a variety of alcohols, and hydroxyl end groups may be capped with a variety of organic acids. For instance, end capping units such as phenylester:

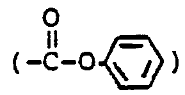 ,

and methylester:

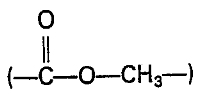 ,

optionally may be included at the end of the polymer chains. The polymer also may be oxidatively crosslinked to at least some degree, if desired, by heating in an oxygen-containing atmosphere (e.g. in air) while in bulk form or as a previously shaped article at a temperature below its melting point for a limited period of time (e.g. for a few minutes).

The polyester of the present invention tends to be substantially insoluble in all common polyester solvents, such as hexafluoroisopropanol and o-chlorophenol, and accordingly is not susceptible to solution processing. It can surprisingly be readily processed by common melt processing techniques as discussed hereafter. Most compositions are soluble in pentafluorophenol.

The wholly aromatic polyester of the present invention commonly exhibits a weight average molecular weight of about 2000 to 200,000, and preferably about 10,000 to 50,000, e.g. about 20,000 to 25,000. Such molecular weight may be determined by standard techniques not involving the solutioning of the polymer, e.g. by end group determination via infra-red spectroscopy on compression moulded films. Alternatively, light scattering techniques in a pentafluorophenol solution may be employed to determine the molecular weight.

The polyester prior to heat treatment additionally commonly exhibits an inherent viscosity (i.e. IV) of at least 60 $cm^3/g$, and preferably at least 100 (e.g. approximately 200 to 800) when dissolved in a concentration of 0.1 percent by weight in pentafluorophenol at 60°C.

In some embodiments the polyester of the present invention may be considered crystalline in the sense that fibres melt extruded therefrom exhibit x-ray diffraction patterns using Ni-filtered CuKβ radiation and flat plate cameras characteristic of polymeric crystalline materials. In other embodiments the polyester of the present invention is substantially amorphous. The aromatic polyester of the present invention in all instances may be easily melt processed.

Unlike the aromatic polyesters commonly encountered in much of the prior art, the polyester of the present invention is not intractable and forms an anisotropic melt phase whereby an atypical degree of order is manifest in the molten polymer. The subject polyester readily forms liquid crystals in the melt phase and accordingly exhibits a high tendency for the polymer chains to orient in the shear direction. Such anisotropic properties are manifest at a temperature which is amenable for melt processing to form shaped articles. Such order in the melt may be confirmed by conventional polarized light techniques whereby crossed polarizers are utilized. More specifically, the anisotropic melt phase may conveniently be confirmed by the use of a Leitz polarizing microscope at a magnification of 40X with the sample on a Leitz hot stage and under a nitrogen atmosphere. The polymer melt is optically anisotropic, i.e. it transmits light when examined between crossed polarizers. The amount of light transmitted increases when the sample is sheared (i.e. is made to flow); however, the sample is optically anisotropic even in the static state.

The polyester of the present invention may be formed by a variety of ester-forming techniques whereby organic monomer compounds possessing functional groups which upon condensation form the requisite recurring moieties are reacted. For instance, the functional groups of the organic monomer

compounds may be carboxylic acid groups, hydroxyl groups, ester groups, acyloxy groups, acid halides, etc. The organic monomer compounds may be reacted in the absence of a heat exchange fluid via a melt acidolysis procedure. They, accordingly, may be heated initially to form a largely melt solution of the reactants wherein some reactants such as terephthalic acid initially are present to some degree as solids. Low levels of terephthalic acid may dissolve under such circumstances. The polymer sometimes is suspended therein as solid polymer particles. A vacuum may be applied to facilitate removal of volatiles formed during the final stage of the condensation (e.g. acetic acid or water).

In US Patent No. 4 067 852 there is described another slurry polymerisation process which may be employed to form the polyester of the present invention wherein the solid product is suspended in a heat exchange medium. The disclosure of this patent is herein incorporated by reference.

When employing either the melt acidolysis procedure or the slurry procedure of US Patent No. 4 067 852 the organic monomer reactants from which moieties I, II and III are derived may be initially provided in a modified form whereby the hydroxyl groups of these monomers are esterified (i.e. they are provided as acyl esters). The lower acyl groups preferably have from about 2 to about 4 carbon atoms. Preferably the acetate esters of the organic compounds which form moieties I, II and III are provided. Accordingly, particularly preferred reactants for the condensation reaction are 6-acetoxy-2-naphthoic acid, 4-acetoxybenzoic acid, and hydroquinone diacetate or 4,4'-diacetoxybiphenyl.

Representative catalysts which optionally may be employed in either the melt acidolysis procedure or in the procedure of US Patent No. 4 067 852 include dialkyl tin oxide (e.g. dibutyl tin oxide), diaryl tin oxide, titanium dioxide, alkoxy titanium silicates, titanium alkoxides, alkali and alkaline earth metal salts of carboxylic acids, the gaseous acid catalysts such as Lewis acids (e.g. $BF_3$), hydrogen halides (e.g. HCl), etc. The quantity of catalyst utilized typically is about 0.001 to 1 percent by weight based upon the total monomer weight, and most commonly about 0.01 to 0.2 percent by weight.

The molecular weight of a previously formed polyester may be further increased via a solid state polymerisation procedure wherein the particulate polymer is heated in an inert atmosphere (e.g. in a nitrogen atmosphere) at a temperature of about 240°C for 10 to 12 hours.

The polyester of the present invention readily can be melt processed in the substantial absence of polymer degradation to form a variety of relatively stiff shaped articles, e.g. moulded three-dimensional articles, fibres, films, tapes, etc. The polyester of the present invention is suited for moulding applications and may be moulded via standard injection moulding techniques commonly utilized when forming moulded articles. Unlike the polyesters commonly encountered in the prior art it is not essential that more severe injection moulding conditions (e.g. higher temperatures), compression moulding, impact moulding, or plasma spraying techniques be utilized. Fibres or films may be melt extruded.

A moulding compound may be formed from the polyester of the present invention which incorporates approximately 1 to 60 percent by weight of a solid filler (e.g. talc) and/or reinforcing agent (e.g. glass fibres).

The polyester of the present invention also may be employed as a coating material which is applied as a powder or from a liquid dispersion.

Fibres formed from the polyester of the invention may be used with particular advantage as tire cords and in other industrial applications, such as conveyor belts, hose, cabling, resin reinforcement, etc. Films formed of the polyester of the present invention may be used as strapping tape, cable wrap, magnetic tape, electric motor dielectric film, etc. The fibres and films exhibit an inherent resistance to burning.

The following examples are presented as specific illustrations of the claimed invention.

### Example 1

To a 300 ml three-neck round bottom flask equipped with a sealed paddle stirrer, gas inlet tube, and a distillation head connected to a condenser were added the following:

(a) 11.51 grams of 6-acetoxy-2-naphthoic acid (0.05 mole);
(b) 49.54 grams of 4-acetoxybenzoic acid (0.275 mole);
(c) 16.99 grams of hydroquinone diacetate (0.0875 mole);
(d) 7.27 grams of isophthalic acid (0.04375 mole);
(e) 7.27 grams of terephthalic acid (0.04375 mole);
(f) 0.0046 gram of potassium acetate catalyst.

The flask was thoroughly purged of oxygen by evacuation and refilling with dry argon three times, and was heated in a fluidized sand bath under a slow stream of argon.

The contents of the flask were initially heated to 240°C over a period of one hour, from 240° to 300°C over a period of two hours, from 300° to 360°C over a period of one hour, and were finally evacuated to 0.13 mbar (0.1 Torr) at 360°C for 15 minutes. The vacuum was released with dry argon, and the contents of the flask were allowed to cool.

The inherent viscosity (IV) of the polymer was approximately 493 $cm^3/g$ as determined in pentafluorophenol solution of 0.1 percent by weight concentration at 60°C in accordance with the equation:

$$IV = \frac{1n\ (\eta\ rel)}{c}$$

where c = concentration of solution (0.1 percent by weight), and η rel = relative viscosity. When the

polymer was subjected to differential scanning calorimetry (20°C/min heating rate), it exhibited a second order glass transition temperature at 110°C and a slight melt endotherm at 310°C. The polymer melt was optically anisotropic.

The powdered polymer was dried in a vacuum oven, and while molten and at a temperature of 360°C was extruded through a single hole spinneret (0.127 mm diameter × 0.178 mm) at a throughput rate of 0.44 (gram/minute). The as-spun filament was quenched in ambient air (i.e. at 22°C (72°F) and 65 percent relative humidity) prior to windup at a speed of 1234 metres/minutes.

A section of the resulting as-spun polyester fibre had a denier of 4.5 and exhibited the following average single filament properties:

| | |
|---|---|
| Tenacity (grams per decitex) | 7.9 |
| Initial modulus (grams per decitex) | 527 |
| Elongation (percent) | 1.8 |

Following thermal treatment in a dry nitrogen flow at 280°C for 15 hours the fibre exhibited the following average single filament properties.

| | |
|---|---|
| Tenacity (grams per decitex) | 18.8 |
| Initial modulus (grams per decitex) | 565 |
| Elongation (percent) | 3.3 |

Example 2

To a 300 ml three-neck round bottom flask equipped with a sealed paddle stirrer, gas inlet tube, and a distillation head connected to a condenser were added the following:

(a) 11.5 grams of 6-acetoxy-2-naphthoic acid (0.05 mole);
(b) 45.0 grams of 4-acetoxybenzoic acid (0.25 mole);
(c) 27.3 grams of 4,4'-diacetoxybiphenyl (0.10 mole);
(d) 16.6 grams of terephthalic acid (0.10 mole); and
(e) 0.02 gram of sodium acetate catalyst.

The flask was thoroughly purged of oxygen by evacuation and refilling with dry argon three times, and was heated in a fluidised sand bath under a slow stream of argon.

The contents of the flask were initially heated with stirring to 240°C over a period of 45 minutes, and to 250°C over a period of 5 minutes, and were maintained at 250°C for 50 minutes. Next the contents were heated from 250°C to 340°C over a period of 75 minutes and from 340° to 380°C over a period of 15 minutes. Finally the flask was evacuated to a pressure of 1.23 mbar (0.95 Torr) and 15 minutes at 380°C. The vacuum was released with dry argon, and the contents of the flask were allowed to cool.

The inherent viscosity (IV) of the polymer was approximately 553 $cm^3/g$ as determined in a pentafluorophenol solution of 0.1 percent by weight concentration at 60°C. When the polymer was subjected to differential scanning calorimetry (20°C/minute heating rate), it exhibited a melt endotherm at about 312°C. The polymer melt was optically anisotropic.

The powdered polymer was dried in a vacuum oven, and while molten and at a temperature of 330°C was extruded through a single hole spinneret (0.127 mm diameter × 0.178 mm) at a throughput rate of 0.39 gram/minute. The as-spun filament was quenched in ambient air (i.e. at 22°C (72°F) and 65 percent relative humidity) prior to windup at a speed of 800 metres/minutes.

A section of the resulting as-spun polyester fibres had a denier of 4.4 and exhibited the following average single filament properties:

| | |
|---|---|
| Tenacity (grams per decitex) | 8.7 |
| Initial modulus (grams per decitex) | 665 |
| Elongation (percent) | 1.5 |

Following thermal treatment in a dry nitrogen flow at 280°C for 15 hours the fibre exhibited the following average single filament properties:

| | |
|---|---|
| Tenacity (grams per decitex) | 24.7 |
| Initial modulus (grams per decitex) | 834 |
| Elongation (percent) | 3.1 |

The physical properties were determined in accordance with the standard ASTM testing procedure D3822.

Example 3

To a 300 ml three-neck round bottom flask equipped with a sealed paddle stirrer, gas inlet tube, four inch Vigreaux column with distilling head, condenser and graduated cylinder were added the following:

(a) 58.7 grams of 6-acetoxy-2-naphthoic acid (0.025 mole);
(b) 55.16 grams of 4-acetoxybenzoic acid (0.306 mole);
(c) 24.13 grams of 4,4'-biphenol diacetate (0.088 mole);
(d) 14.83 grams of terephthalic acid (0.089 mole); and
(e) 0.0025 gram of potassium acetate catalyst.

The flask was thoroughly purged of oxygen by evacuation and refilling with dry nitrogen three times, and was heated under a slow stream of nitrogen.

The contents of the flask were initially heated with stirring from room temperature to 230°C over a period of 50 minutes during which time the monomers substantially melted. The contents were heated from 230°C to 360°C over a period of 210 minutes, and were heated for 15 minutes at 360°C at which temperature the flask was evacuated to a pressure of 1.33 mbar (1 Torr). The vacuum was released with dry nitrogen, and the contents of the flask were allowed to cool to room temperature.

The inherent viscosity (IV) of the polymer was approximately 704 $cm^3/g$ as determined in a 1:1 pentafluorophenol:hexafluoroisopropanol solution of 0.1 percent (W/V) concentration at 25°C. Also, the melt viscosity of the resulting polymer was 400 poise at 370°C when measured in a Rheometrics mechanical spectrometer at a shear rate of 10 $sec^{-1}$. When the polymer was subjected to differential scanning calorimetry (20°C/min. heating rate), it exhibited a melt endotherm peak at 337°C. The polymer melt was optically anisotropic.

The remaining polymer while molten and at a temperature of 345°C was extruded through a single hole spinneret (0.125 mm (0.005 inch) diameter × 0.175 mm (0.007 inch)) at a throughput rate of 0.42 gram/minute. The as-spun filament was quenched in ambient air (i.e. at 22°C (72°F) and 65 percent relative humidity) prior to windup at a speed of 800 metres/minute.

A section of the resulting as-spun polyester fibre had a denier of 5 and exhibited the following average single filament properties:

| | |
|---|---|
| Tenacity (grams per decitex) | 9.1 |
| Initial modulus (grams per denier) | 666 |
| Elongation (percent) | 1.48 |

Following heat treatment in a flowing dry nitrogen atmosphere (50 SCFH) at 300°C for 8 hours the fibre exhibited the following average single filament properties:

| | |
|---|---|
| Tenacity (grams per decitex) | 28.4 |
| Initial modulus (grams per decitex) | 1047 |
| Elongation (percent) | 2.6 |

Examples 4 to 11

Example 3 was substantially repeated with the exceptions indicated. More specifically, the final polymerization temperature was varied (i.e. 360°C, 370°C, or 380°C), the quantity of potassium acetate catalyst was varied (i.e. 0.0025 gram, 0.0100 gram, or 0.0175 gram), and the time while heated at the final polymerization temperature under a pressure of 1.33 mbar (1 Torr) was varied (i.e. 15 minutes, 37.5 minutes, or 60 minutes). The melt extrusion temperature utilized in each instance is as indicated hereafter (i.e. 360°C or 375°C).

The polymerization conditions, the peak temperature by differential scanning calorimetry, the inherent viscosity, and the melt viscosity are reported below:

| Example No. | Final Polymerization Temperature (°C) | Time at Final Polymerization Temperature Under 1 Torr (minutes) | Quantity of Catalyst (gram) | Differential Scanning Calorimetry Peak Temperature (°C) | Inherent Viscosity as Determined in Ex. 2 ($cm^3/g$) | Melt Viscosity as Determined in Ex. 2 (poise) |
|---|---|---|---|---|---|---|
| 4 | 380 | 15 | 0.0025 | 335 | 1030 | 700 |
| 5 | 360 | 15 | 0.0175 | 340 | 760 | 700 |
| 6 | 380 | 15 | 0.0175 | 342 | 1140 | 18,000 |
| 7 | 360 | 60 | 0.0025 | 342 | 910 | 2,000 |
| 8 | 380 | 60 | 0.0025 | 347 | 1600 | 130,000 |
| 9 | 360 | 60 | 0.0175 | 353 | 1290 | 20,000 |
| 10 | 380 | 60 | 0.0175 | 346 | 1350 | 100,000 |
| 11 | 370 | 37.5 | 0.0100 | 341 | 850 | 1,200 |

The melt extrusion temperatures, and the average single filament properties before and after heat treatment are reported below:

| | As Spun Properties | | | | Heat Treated Properties | | |
|---|---|---|---|---|---|---|---|
| Example No. | Melt Extrusion Temperature (°C) | Tenacity (grams per decitex) | Initial Modulus (grams per decitex) | Elongation (percent) | Tenacity (grams per decitex) | Initial Modulus (grams per decitex) | Elongation (percent) |
| 4 | 375 | 8.6 | 627 | 1.5 | 24.6 | 1064 | 2.36 |
| 5 | 360 | 9.2 | 715 | 1.4 | 26.3 | 1152 | 2.33 |
| 6 | 375 | 5.2 | 528 | 1.1 | 6.6 | 643 | 1.0 |
| 7 | 360 | 7.1 | 607 | 1.2 | 15.3 | 995 | 1.54 |
| 8 | not spun | — | — | — | — | — | — |
| 9 | 375 | 5.4 | 498 | 1.1 | 9.6 | 796 | 1.2 |
| 10 | 375 | 1.7 | 373 | 0.5 | 1.9 | 472 | 0.4 |
| 11 | 360 | 9.1 | 669 | 1.5 | 26.3 | 1085 | 2.46 |

The polymer of Example 8 could not be spun at a temperature below 390°C and possessed an excessively high melt viscosity at 370°C. The polymer of Example 11 also possessed an excessively high melt viscosity. The products of Examples 5 and 11 were considered to be superior and yielded heat treated fibre tenacities in excess of 22 grams per decitex and heat treated fibre initial modulus values approximating 1,100 grams per decitex.

Examples 12 to 17

Example 3 was substantially repeated with the exceptions indicated. More specifically, the concentration of 6-oxy-2-naphthoyl moiety in the resulting polymer was maintained constant at 5 mole percent, and the concentrations of the other three essential moieties were varied as indicated. Also the pressure employed during final polymerization step was either 1.33 mbar or 133 mbar as indicated while conducting the final polymerization step at 370°C for 37.5 minutes. The inherent viscosity of the products in each instance and peak temperatures by differential scanning calorimetry are reported below:

| Example No. | Percent of Moieties in Product: 6-oxy-2-naphthoyl | 4-oxy-benzoyl | 4,4'-dioxy-biphenyl | terephthaloyl | Pressure at Final Polymerization Temperature (Torr) | Inherent Viscosity as Determined in Ex. 2 $cm^3/g$ | Differential Scanning Calorimetry Peak Temperature (°C) |
|---|---|---|---|---|---|---|---|
| 12 | 5 | 45 | 25 | 25 | 1 | 860 | 370 |
| 13 | 5 | 50 | 22.5 | 22.5 | 1 | 460 | 345 |
| 14 | 5 | 55 | 20 | 20 | 100 | 580 | 346 |
| 15 | 5 | 60 | 17.5 | 17.5 | 100 | 621 | 339 |
| 16 | 5 | 65 | 15 | 15 | 100 | 810 | 337 |
| 17 | 5 | 70 | 12.5 | 12.5 | 100 | 810 | 339 |

The melt extrusion temperatures, and the average single filament properties before and after heat treatment are reported below:

| As-Spun Properties | | | | | Heat Treated Properties | | |
|---|---|---|---|---|---|---|---|
| Example No. | Melt Extrusion Temperature (°C) | Tenacity (grams per decitex) | Initial Modulus (grams per decitex) | Elongation (percent) | Tenacity (grams per decitex) | Initial Modulus (grams per decitex) | Elongation (percent) |
| 12 | 375 | 5.4 | 605 | 1.0 | 9.3 | 814 | 1.07 |
| 13 | 360 | 5.8 | 676 | 1.0 | 20 | 940 | 2.0 |
| 14 | 345 | 7.9 | 657 | 1.33 | 29.9 | 1187 | 2.57 |
| 15 | 345 | 8.9 | 702 | 1.41 | 29.8 | 1165 | 2.67 |
| 16 | 360 | 9.2 | 683 | 1.54 | 27.3 | 1185 | 2.38 |
| 17 | 375 | 7.5 | 651 | 1.30 | 16.5 | 974 | 1.63 |

Example 18

To a 5 gallon 316 stainless steel autoclave equipped with a sealed stirrer, gas inlet tube, and distillation head connected to a condenser were added the following:

(a) 898 grams of 6-acetoxy-2-naphthoic acid (3.9 moles);
(b) 8,270 grams of 4-acetoxybenzoic acid (45.9 mole);
(c) 3,620 grams of 4,4'-biphenol diacetate (13.3 mole);
(d) 2,225 grams of terephthalic acid (13.4 mole); and
(e) 1.5 gram of potassium acetate catalyst.

The autoclave was thoroughly purged of oxygen by evacuation and refilling with nitrogen three times. Thereafter a nitrogen flow of 4 SCFH was passed through the autoclave.

The hot oil jacket in the autoclave was raised to 260°C. When the contents of the autoclave reached 200°C, the temperature of the hot oil jacket was raised to 290°C and held at that temperature for 1 hour, raised to 320°C and held at that temperature for one-half hour, and then raised to 370°C for the remainder of the polymerization. When the polymerization melt reached approximately 360°C, the nitrogen purge was terminated, and a 1.33 mbar (100 Torr) pressure was placed upon the reactor until a reactor torque comparable to 1,750 poise (Instron rheometer, 10 $sec^{-1}$, 370°C, 100 mm (4 inch) × 0.75 mm (0.03 inch) die) was obtained. The autoclave next was pressurized to 2 bar (30 psi) with nitrogen, and a polymer strand was extruded into water, and was pelletized. The polymer pellets were dried at 130°C for 16 hours.

While using an Arburg Model 221E/150 injection moulding machine with an 18 mm barrel, tensile and flexural test specimens were moulded at 340°C. The tensile bars had a cross-section of 1.5 mm (1/16 inch) × 3 mm (1/8 inch), and the flexural bars had a cross-section of 3 mm (1/8 inch) × 12.5 mm (1/2 inch). Flexural testing was conducted at room temperature on an Instron Testing Unit according to ASTM D790. Tensile testing was conducted using Type V tensile bars according to ASTM D638. Izod impact was determined using ASTM S256. Heat deflection testing was determined using flexural bars set on edge according to ASTM D648.

*Tensile Properties*
Modulus: 11 $GN/m^2$ (1,590,000 psi)
Strength: 190 $MN/m^2$
Elongation: 2.6 percent

*Flexural Properties*
Modulus: 8.4 $GN/m^2$ (1,200,000 psi)
Strength: 123 $MN/m^2$ (17,600 psi)

*Izod Impact*
5.3 ft lb/in

*Heat Deflection Temperature*
433°F at 1.8 $MN/m^2$ (264 psi).

Example 19

The polymer preparation portion of Example 18 was substantially repeated with the exceptions indicated. After the initial nitrogen purging, 150 grams of acetic anhydride were added through a liquid additions port to the autoclave. Also, the polymerization was terminated when a reactor torque comparable to 1,000 poise (Instron rheometer, 10 $sec^{-1}$, 370°C, 100 mm (4 inch) × 0.75 mm (0.03 inch) die) was obtained. The polymer exhibited an inherent viscosity of 865 $cm^3/g$ as determined in Example 1.

The polymer was melt extruded through a 31 hole spinneret while at a temperature of 352°C. The holes of the spinneret measured 0.125 mm (0.005 inch) × 0.175 mm (0.007 inch). The polymer throughput was 0.85 gram/hole/minute, and the resulting yarn was taken up at a rate of 1,530 metres per minute.

The resulting as-spun fibres exhibited the following average single filament properties:

| | |
|---|---|
| Tenacity (grams per decitex) | 8.6 |
| Initial modulus (grams per decitex) | 660 |
| Elongation (percent) | 1.4 |

Following thermal treatment in a dry nitrogen flow at 300°C for 8 hours the fibre exhibited the following average single filament properties:

| | |
|---|---|
| Tenacity (grams per decitex) | 27.2 |
| Initial modulus (grams per decitex) | 1061 |
| Elongation (percent) | 2.4 |

Examples 20 and 21

Example 3 was substantially repeated with the exception that the relative quantities of the reactants were varied with the 6-oxy-2-naphthoyl moiety being provided a molar concentration of 3 percent and the concentration of potassium acetate used was 100 ppm. The relative molar concentrations of the moieties, and the inherent viscosities, and differential scanning calorimetry peak temperatures of the product are reported below:

| Molar Percent of Moieties in Product | | | | | Inherent Viscosity as Determined in Ex. 2 | Differential Scanning Calorimetry Peak Temperature (°C) |
|---|---|---|---|---|---|---|
| Example No. | 6-oxy-2-naphthoyl | 4-oxy-benzoyl | 4,4'-dioxy-biphenyl | tere-phthaloyl | | |
| 20 | 3 | 62 | 17.5 | 17.5 | 7.62 | 354 |
| 21 | 3 | 57 | 20 | 20 | 8.25 | 371 |

The melt extrusion temperatures and the average single filament properties before and after heat treatment are reported hereafter. The as-spun denier of the fibre in each instance was 5. The heat treatment values which are reported in the table which follows were obtained by heating the as-spun fibres in a nitrogen atmosphere at 300°C for 8 hours.

| | As-Spun Properties | | | | Heat Treated Properties | | |
|---|---|---|---|---|---|---|---|
| Example No. | Melt Extrusion Temperature (°C) | Tenacity (grams per decitex) | Initial Modulus (grams per decitex) | Elongation (percent) | Tenacity (grams per decitex) | Initial Modulus (grams per decitex) | Elongation (percent) |
| 20 | 360 | 8.0 | 642 | 1.35 | 27.2 | 1106 | 2.35 |
| 21 | 375 | 8.9 | 687 | 1.43 | 26.7 | 1131 | 2.30 |

Example 22

To a 300 ml three-neck round bottom flask equipped with a sealed paddle stirrer, gas inlet tube, and a distillation heat connected to a condenser were added the following:

(a) 6.9 grams of 6-acetoxy-2-naphtholic acid (0.03 mole);
(b) 54.1 grams of 4-acetoxybenzoic acid (0.30 mole);
(c) 16.5 grams of hydroquinone diacetate (0.085 mole);
(d) 7.1 grams of isophthalic acid (0.0425 mole);
(e) 7.1 grams of terephthalic acid (0.0425 mole); and
(f) 0.005 gram of potassium acetate catalyst.

The reaction flask was thoroughly purged three times with nitrogen. The contents of the flask were initially heated to 240°C from 240° to 300°C over a period of two hours, and from 300° to 360°C over a period of one hour while being purged with nitrogen at a flow rate of 25 ml per minute. When a temperature of 360°C was reached, the flask was evacuated to 73 mbar (0.55 Torr) for 15 minutes. The vacuum was released with nitrogen, and the contents of the flask were allowed to cool.

The inherent viscosity (IV) of the polymer was approximately 2.61 as determined in a 1:1 pentafluorophenol:hexafluoroisopropanol solution of 0.1 percent (W/V) concentration at 25°C when utilizing a Schott automatic viscometer. When the polymer was subjected to differential scanning calorimetry (20°C/min heating rate), it exhibited endotherm peaks at 335°C and 372°C. The polymer melt was optically anisotropic.

The remaining polymer was dried at 130°C for two days and while molten and at a temperature of 390°C was extruded through a single hole spinneret (0.125 mm (0.005 inch) diameter × 0.175 mm (0.007 inch)) at a throughput rate of 0.42 gram/minute. The as-spun filament was quenched in ambient air (i.e. at 22°C (72°F) and 65 percent relative humidity) prior to windup at a speed of 1500 metrs/minute.

A section of the resulting as-spun polyester fibre had a denier of 2.9 and exhibited the following average single filament properties:

| | |
|---|---|
| Tenacity (grams per decitex) | 6.6 |
| Initial modulus (grams per decitex) | 649 |
| Elongation (percent) | 1.2 |

Following heat treatment in a nitrogen atmosphere having a flow rate of 2 litres/minute at 270°C for 8 hours the fibre exhibited the following average single filament properties:

| | |
|---|---|
| Tenacity (grams per decitex) | 18.0 |
| Initial modulus (grams per decitex) | 748 |
| Elongation (percent) | 2.54 |

Example 23

Example 22 was substantially repeated with the exceptions indicated. The following chemicals were added to the flask:

(a) 13.8 grams of 6-acetoxy-2-naphthoic acid (0.06 mole);
(b) 99.1 grams of 4-acetoxybenzoic acid (0.55 mole);
(c) 37.9 grams of hydroquinone diacetate (0.195 mole);
(d) 24.3 grams of isophthalic acid (0.14625 mole);
(e) 8.1 grams of terephthalic acid (0.04875 mole); and
(f) 0.023 gram of 4-dimethylaminopyridine catalyst.

The resulting polymer exhibited an inherent viscosity of 2.15, and a glass transition temperature at 100°C. Monofilaments were spun while the molten polymer was at a temperature of 345°C while employing a windup speed of 1159 metres/minute.

A section of the resulting as-spun polyester fibre had a denier of 3.3 and exhibited the following average single filament properties:

| | |
|---|---|
| Tenacity (grams per decitex) | 7.5 |
| Initial modulus (grams per decitex) | 517 |
| Elongation (percent) | 1.8 |

Following heat-treatment in the nitrogen atmosphere at 270°C for 8 hours the fibre exhibited the following average single filament properties:

| | |
|---|---|
| Tenacity (grams per decitex) | 19.7 |
| Initial modulus (grams per decitex) | 532 |
| Elongation (percent) | 3.84 |

Example 25

Example 23 was substantially repeated with the exceptions indicated. The following chemicals were added to the flask:

(a) 13.9 grams of 6-acetoxy-2-naphthoic acid (0.06 mole);
(b) 81.1 grams of 4-acetoxybenzoic acid (0.45 mole);
(c) 47.6 grams of hydroquinone diacetate (0.245 mole);
(d) 20.4 grams of isophthalic acid (0.1225 mole);
(e) 20.4 grams of terephthalic acid (0.1225 mole); and
(f) 0.009 gram of potassium acetate catalyst, and
(g) 0.009 gram of titanium potassium oxalate catalyst.

The resulting polymer exhibited an inherent viscosity of 249 $cm^3/g$, and a differential scanning calorimetry melt endotherm peak at 328°C. Monofilaments were spun while the molten polymer was at a temperature of 360°C while employing a windup speed of 1799 metres/minute.

A section of the resulting as-spun polyester fibre had a denier of 2.3 and exhibited the following average single filament properties:

| | |
|---|---|
| Tenacity (grams per decitex) | 6.7 |
| Initial modulus (grams per decitex) | 528 |
| Elongation (percent) | 1.4 |

Following heat-treatment in the nitrogen atmosphere 270°C for 8 hours the fibre exhibited the following average single filament properties:

| | |
|---|---|
| Tenacity (grams per decitex) | 20.7 |
| Initial modulus (grams per decitex) | 632 |
| Elongation (percent) | 3.58 |

Example 25

Example 22 was substantially repeated with the exceptions indicated. The following chemicals were added to the flask:

(a) 11.5 grams of 6-acetoxy-2-naphthoic acid (0.05 mole);
(b) 108.1 grams of 4-acetoxybenzoic acid (0.60 mole);
(c) 34.0 grams of hydroquinone diacetate (0.175 mole);
(d) 14.5 grams of isophthalic acid (0.0875 mole);
(e) 14.5 grams of terephthalic acid (0.0875 mole); and
(f) 0.009 gram of potassium acetate catalyst.

The resulting polymer exhibited an inherent viscosity of 2.35, and differential scanning calorimetry melt endotherm peaks at 335°C and 385°C. Monofilaments were spun while the molten polymer was at a temperature of 390°C while employing a windup speed of 1074 metres/minute.

A section of the resulting as-spun polyester fibre had a denier of 3.5 and exhibited the following average single filament properties:

| | |
|---|---|
| Tenacity (grams per decitex) | 3.8 |
| Initial modulus (grams per decitex) | 564 |
| Elongation (percent) | 0.75 |

Following heat-treatment in the nitrogen atmosphere at 290°C for 8 hours the fibre exhibited the following average single filament properties:

| | |
|---|---|
| Tenacity (grams per decitex) | 14.7 |
| Initial modulus (grams per decitex) | 727 |
| Elongation (percent) | 2.02 |

Example 26

Example 22 was substantially repeated with the exceptions indicated. The following chemicals were added to the flask:

(a) 11.5 grams of 6-acetoxy-2-naphthoic acid (0.05 mole);
(b) 81.1 grams of 4-acetoxybenzoic acid (0.45 mole);
(c) 48.6 grams of hydroquinone diacetate (0.25 mole);
(d) 20.8 grams of isophthalic acid (0.125 mole);
(e) 20.8 grams of terephthalic acid (0.125 mole); and
(f) 0.009 gram of potassium acetate catalyst.

The resulting polymer exhibited an inherent viscosity of 347 $cm^3/g$, and differential scanning calorimetry melt endotherm peaks at 335°C and 375°C. Monofilaments were spun while the molten polymer was at a temperature of 375°C while employing a windup speed of 919 metres/minute.

A section of the resulting as-spun polyester fibre had a denier of 4.6 and exhibited the following average single filament properties:

| | |
|---|---|
| Tenacity (grams per decitex) | 6.4 |
| Initial modulus (grams per decitex) | 550 |
| Elongation (percent) | 1.35 |

Following heat-treatment in the nitrogen atmosphere at 280°C for 15 hours the fibre exhibited the following average single filament properties:

| | |
|---|---|
| Tenacity (grams per decitex) | 16.2 |
| Initial modulus (grams per decitex) | 763 |
| Elongation (percent) | 2.25 |

Example 27

Example 22 was substantially repeated with the exceptions indicated. The following chemicals were added to the flask:

(a) 11.5 grams of 6-acetoxy-2-naphthoic acid (0.05 mole);
(b) 72.1 grams of 4-acetoxybenzoic acidd (0.40 mole);
(c) 53.4 grams of hydroquinone diacetate (0.275 mole);
(d) 34.2 grams of isophthalic acid (0.20625 mole);
(e) 11.4 grams of terephthalic acid (0.06875 mole); and
(f) 0.023 gram of 4-dimethylaminopyridine catalyst.

The resulting polymer exhibited an inherent viscosity 1.6, and a differential scanning calorimetry melt endotherm peak at 265°C. Monofilaments were spun while the molten polymer was at a temperature of 315°C while employing a windup speed of 2658 metres/minute.

A section of the resulting as-spun polyester fibre had a denier of 1.6 and exhibited the following average single filament properties:

| | |
|---|---|
| Tenacity (grams per decitex) | 5.6 |
| Initial modulus (grams per decitex) | 385 |
| Elongation (percent) | 2.1 |

Following heat-treatment in the nitrogen atmosphere at 270°C for 8 hours the fibre exhibited the following average single filament properties:

| | |
|---|---|
| Tenacity (grams per decitex) | 16.4 |
| Initial modulus (grams per decitex) | 393 |
| Elongation (percent) | 4.29 |

Example 28

Example 22 was substantially repeated with the exceptions indicated. The following chemicals were added to the flask:

(a) 4.6 grams of 6-acetoxy-2-naphthoic acid (0.02 mole);
(b) 36.1 grams of 4-acetoxybenzoic acid (0.20 mole);
(c) 11.7 grams of hydroquinone diacetate (0.14 mole);
(d) 11.6 grams of isophthalic acid (0.07 mole);
(e) 11.6 grams of terephthalic acid (0.07 mole); and
(f) 0.005 gram of potassium acetate catalyst.

The resulting polymer exhibited an inherent viscosity of 198 $cm^3/g$, and differential scanning calorimetry endotherm peaks at 332°C and 350°C. Monofilaments were spun while the molten polymer was at a temperature of 390°C while employing a windup speed of 810 metres/minute.

A section of the resulting as-spun polyester fibre had a denier of 4.0 and exhibited the following average single filament properties:

| | |
|---|---|
| Tenacity (grams per decitex) | 5.1 |
| Initial modulus (grams per decitex) | 550 |
| Elongation (percent) | 1.1 |

Example 29

Example 22 was substantially repeated with the exceptions indicated. The following chemicals were added to the flask:

(a) 4.6 grams of 6-acetoxy-2-naphthoic acid (0.02 mole);
(b) 27.1 grams of 4-acetoxybenzoic acid (0.15 mole);
(c) 32.1 grams of hydroquinone diacetate (0.165 mole);

(d) 13.8 grams of isophthalic acid (0.082 mole);
(e) 13.8 grams of terephthalic acid (0.082 mole); and
(f) 0.005 gram of potassium acetate catalyst.

The resulting polymer exhibited an inherent viscosity of 1.63, and a differential scanning calorimetry glass transition temperature at 100°C and a melt endotherm peak at 372°C. Monofilaments were spun while the molten polymer was at a temperature of 360°C while employing a windup speed of 2000 metres/minute.

A section of the resulting as-spun polyester fibre had a denier of 1.75 and exhibited the following average single filament properties:

| | |
|---|---|
| Tenacity (grams per decitex) | 4.8 |
| Initial modulus (grams per decitex) | 506 |
| Elongation (percent) | 1.1 |

Example 30

Example 22 was substantially repeated with the exceptions indicated. The following chemicals were added to the flask:

(a) 4.6 grams of 6-acetoxy-2-naphthoic acid (0.02 mole);
(b) 27.1 grams of 4-acetoxybenzoic acid (0.15 mole);
(c) 32.1 grams of hydroquinone diacetate (0.165 mole);
(d) 20.7 grams of isophthalic acid (0.1245 mole);
(e) 6.9 grams of terephthalic acid (0.0415 mole); and
(f) 0.005 gram of potassium acetate catalyst.

The resulting polymer exhibited an inherent viscosity of 174 $cm^3/g$, and a differential scanning calorimetry endotherm peak at 307°C. Monofilaments were spun while the molten polymer was at a temperature of 375°C while employing a windup speed of 1234 metres/minute.

A section of the resulting as-spun polyester fibre had a denier of 3.4 and exhibited the following average single filament properties:

| | |
|---|---|
| Tenacity (grams per decitex) | 5.9 |
| Initial modulus (grams per decitex) | 337 |
| Elongation (percent) | 2.2 |

Following heat-treatment in the nitrogen atmosphere at 270°C for 8 hours the fibre exhibited the following average single filament properties:

| | |
|---|---|
| Tenacity (grams per decitex) | 14 |
| Initial modulus (grams per decitex) | 407 |
| Elongation (percent) | 3.17 |

Example 31

To a 2 litre flask equipped with a 316 stainless steel stirrer, gas inlet tube, and an 11 inch Vigreaux column with distillation head and receiver were added the following:

(a) 124.3 grams of 6-acetoxy-2-naphthoic acid (0.54 mole);
(b) 583.8 grams of 4-acetoxybenzoic acid (3.24 mole);
(c) 173 grams of hydroquinone diacetate (0.89 mole), or 10 percent excess;
(d) 67.3 grams of isophthalic acid (0.40 mole);
(e) 67.3 grams of terephthalic acid (0.40 mole); and
(f) 0.02 gram of potassium acetate catalyst.

The flask was thoroughly purged of oxygen with nitrogen, and a slow purge of nitrogen of approximately 25 ml/minute was applied to the flask. The contents of the flask were initially heated to 240°C from 240° to 300°C over a period of two hours, and from 300° to 360°C over a period of one hour. The temperature was first maintained at 360°C for one-half hour, and then for another one-quarter hour at 360°C while under 1.33 mbar (1 Torr). The vacuum was released, the product was allowed to cool, and was ground in a Wiley mill.

The resulting polymer exhibited an inherent viscosity of 561 $cm^3/g$ as determined in Example 1, and a differential scanning calorimetry endotherm peak at 323°C.

The polymer next was dried for 16 hours at 130°C and tensile and flexural test specimens were moulded at 340°C in an Arburg Model 221E/150 injection moulding maching having an 18 mm barrel. Standard tensile bars having a cross-section of 1.5 mm (1/16 inch) × 3 mm (1/8 inch) were produced, and standard flexural bars having a cross-section of 3 mm (1/8 inch) × 12.5 mm (1/2 inch) were produced. Tensile testing was conducted at room temperature using Type V tensile bars and an Instron testing unit according to ASTM D638. Flexural testing was conducted at room temperature according to ASTM D790. Izod impact testing was conducted according to ASTM D256. The following values were obtained:

*Tensile Properties*
Modulus: 18 $GN/m^2$ (2,600,000 psi)
Strength: 170 $MN/m^2$ (25,000 psi)
Elongation: 1.3 percent

*Flexural Modulus*
Modulus: 10.5 $GN/m^2$ (1,500,000 psi)
Strength: 156 $MN/m^2$ (22,300 psi)

*Izod Impact*
3.3 ft lb/in.

Although the invention has been described with preferred embodiments it is to be understood that variations and modifications may be employed without departing from the concept of the invention as defined in the following claims.

**Claims**

1. A melt processable polyester capable of forming an anisotropic melt phase at a temperature below approximately 400°C consisting essentially of the recurring moieties I, II, III and IV wherein:

I is 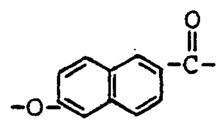

II is 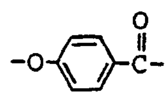

III is a symmetrical dioxyaryl moiety of the formula:

—O—Ar—O—

selected from 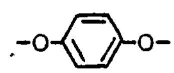 and 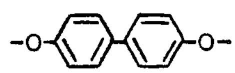

and
IV is a dicarboxyaryl moiety of the formula

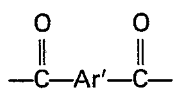

where Ar′ is a divalent radical comprising at least one aromatic ring characterised in that said polyester comprises 3 to 15 mole percent of moiety I, 20 to 70 mole percent of moiety II, 7.5 to 38.5 mole percent of moiety III, and 7.5 to 38.5 mole percent of moiety IV and in that when moiety III is

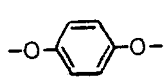

moiety IV is 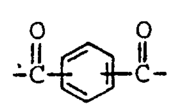

comprising a mixture of 40 to 90 mole percent in the form of the isophthaloyl moiety and 10 to 60 mole percent in the form of the terephthaloyl moiety, and wherein moieties III and IV may include substitution of at least some of the hydrogen atoms present upon an aromatic ring selected from the group consisting of an alkyl group of 1 to 4 carbon atoms, an alkoxy group of 1 to 4 carbon atoms, halogen, phenyl, substituted phenyl, and mixtures thereof.

2. A melt processable polyester according to Claim 1 wherein the dicarboxyaryl moiety IV is selected from the group consisting of

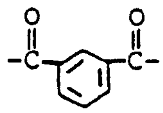 , 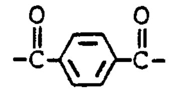 , 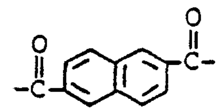 ,

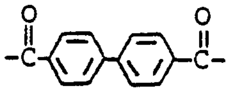 , 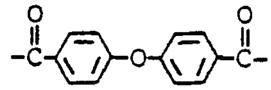 , 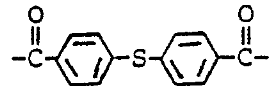 ,

and 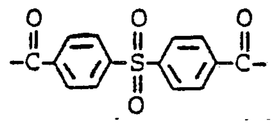 ,

and mixtures of the foregoing.

3. A melt processable polyester according to claim 1 wherein Ar′ of the dicarboxyaryl moiety IV is

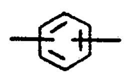

wherein the bonds are meta and/or para disposed.

4. A melt processable polyester according to any one of the preceding claims wherein said polyester comprises

5 to 10 mole percent of moiety I,

50 to 54 mole percent of moiety II,

12.5 to 22.5 mole percent of moiety III, and

12.5 to 27.5 mole percent of moiety IV.

5. A moulding composition comprising the melt processable polyester of claim 1 and 1 to 60% by weight of a solid filler and/or reinforcing agent.

6. A shaped article formed from a polyester according to any one of claims 1 to 4 or from the moulding composition of claim 5.

**Patentansprüche**

1. In der Schmelze verarbeitbarer Polyester, welcher bei einer Temperatur von unter etwa 400°C eine anisotrope Schmelzphase bilden kann und welcher im wesentlichen aus den sich wiederholenden Gruppierungen I, II, III und IV besteht, worin

I 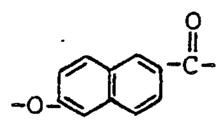

ist, II 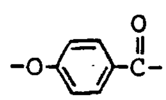

ist,

III eine symmetrische Dioxyarylgruppierung der Formel

$$-O-Ar-O-$$

ist, die ausgewählt ist aus

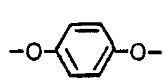 und 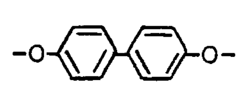

und

IV eine Dicarboxyarylgruppierung der Formel

$$-\overset{O}{\overset{\|}{C}}-Ar'-\overset{O}{\overset{\|}{C}}-$$

ist, worin Ar′ ein zweiwertiges Radikal mit mindestens einem aromatischen Ring bedeutet, dadurch gekennzeichnet, daß der Polyester 3 bis 15 Mol-% Gruppierungen I, 20 bis 70 Mol-% Gruppierungen II, 7,5 bis 38,5 Mol-% Gruppierungen III und 7,5 bis 38,5 Mol-% Gruppierungen IV enthält, und daß, wenn die Gruppierung III

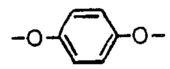

ist,

die Gruppierung IV

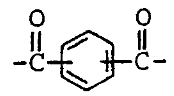

ist, welche ein Gemisch aus 40 bis 90 Mol-% in Form der Isophthaloylgruppierungen und 10 bis 60 Mol-% in Form der Terephthaloylgruppierungen ist, wobei die Gruppierungen III und IV eine Substitution an mindestens einigen der an einem aromatischen Ring vorliegenden Wasserstoffatome unfassen können, die ausgewählt ist aus einer Alkylgruppe mit 1 bis 4 Kohlenstoffatomen, einer Alkoxygruppe mit 1 bis 4 Kohlenstoffatomen, Halogen, Phenyl, substituiertem Phenyl und Gemischen davon.

2. In der Schmelze verarbeitbarer Polyester nach Anspruch 1, bei welchem die Dicarboxyarylgruppierung IV ausgewählt ist aus

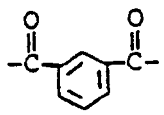 , 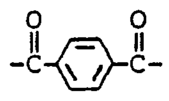 , 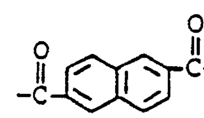 ,

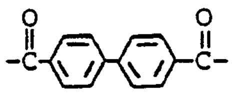 , 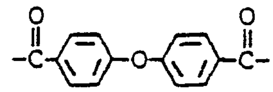 , 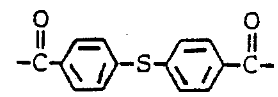 ,

und 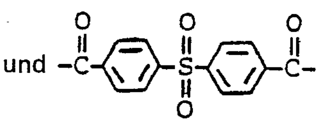 ,

sowie Gemischen davon.

3. In der Schmelze verarbeitbarer Polyester nach Anspruch 1, worin Ar' der Dicarboxyarylgruppierung IV für

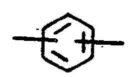

steht, worin die Bindungen in meta- und/oder para-Stellung vorliegen.

4. In der Schmelze verarbeitbarer Polyester gemäß einem der vorhergehenden Ansprüche, bei welchem der Polyester

5 bis 10 Mol-% Gruppierungen I,
50 bis 65 Mol-% Gruppierungen II,
12,5 bis 22,5 Mol-% Gruppierungen III und
12,5 bis 27,5 Mol-% Gruppierungen IV

enthält.

5. Formmasse, welche den in der Schmelze verarbeitbaren Polyester von Anspruch 1 sowie 1 bis 60 Gew.% eines festen Füllstoffs und/oder eines Verstärkungsmittels enthält.

6. Geformter Gegenstand, welcher aus einem Polyester nach einem der Ansprüche 1 bis 4 oder aus der Formmasse nach Anspruch 5 hergestellt ist.

**Revendications**

1. Polyester pouvant être traité à l'état fondu, capable de former une phase fondue anisotrope à une température inférieure à environ 400°C, comprenant essentiellement les parties récurrentes I, II, III et IV, où

I est 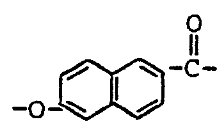

II est 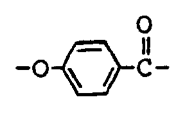

III est une partie dioxyaryle symétrique représentée par la formule:

—O—Ar—O—

choisie parmi

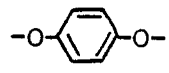 et 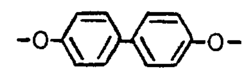

et

IV est une partie dicarboxyaryle de formule

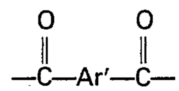

dans laquelle Ar' est un radical divalent comprenant au moins un cycle aromatique, caractérisé en ce que ce polyester comprend 3 à 15% en moles de partie I, 20 à 70% en moles de partie II, 7,5 à 38,5% en moles de partie III, et 7,5 à 38,5% en moles de partie IV et en ce que dans le cas où la partie III est

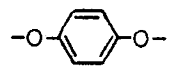

la partie IV est

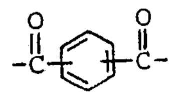

comprenant un mélange de 40 à 90% en moles sous forme de la partie isophtaloyle et 10 à 60% en moles sous forme de la partie téréphtaloyle, et où des parties III et IV peuvent comprendre une substitution d'au moins certains des atomes d'hydrogène présents sur un cycle aromatique, choisie dans le groupe comprenant un groupe alcoyle ayant 1 à 4 atomes de carbone, un groupe alcoxy ayant 1 à 4 atomes de carbone, un atome d'halogène, un groupe phényle, phényle substitué et leurs mélanges.

2. Polyester pouvant être traité à l'état fondu suivant la revendication 1, dans lequel la partie dicarboxyaryle IV est choisie dans le groupe comprenant

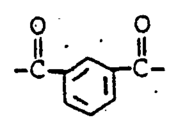 , 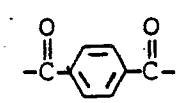 , 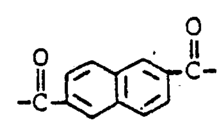 ,

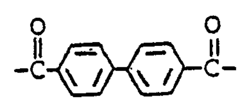 , 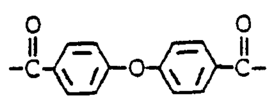 , 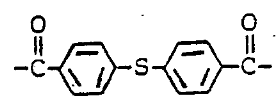 ,

et 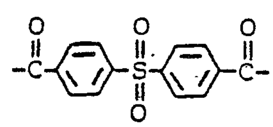 ,

et leurs mélanges.

3. Polyester pouvant être traité à l'état fondu suivant la revendication 1, dans lequel le groupe Ar' de la partie dicarboxyaryle IV est

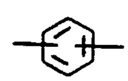

dans lequel les liaisons sont disposées en positions méta et/ou para.

4. Polyester pouvant être traité à l'état fondu suivant l'une quelconque des revendications précédentes, dans lequel ce polyester comprend:

5 à 10% en moles de partie I,
50 à 65% en moles de partie II,
12,5 à 22,5% en moles de partie III, et
12,5 à 27,5% en moles de partie IV.

5. Composition de moulage comprenant le polyester pouvant être traité à l'état fondu selon la revendication 1 et de 1 à 60% en poids d'une charge solide et/ou d'un agent de renforcement.

6. Article façonné formé à partir d'un polyester suivant l'une quelconque des revendications 1 à 4, ou bien à partir de la composition de moulage suivant la revendication 5.